Europäisches Patentamt

European Patent Office

Office européen des brevets

(19)

(11) Veröffentlichungsnummer : **0 130 237 B1**

(12) **EUROPÄISCHE PATENTSCHRIFT**

(45) Veröffentlichungstag der Patentschrift :
09.09.87

(21) Anmeldenummer : 83110944.2

(22) Anmeldetag : 03.11.83

(51) Int. Cl.⁴ : **F 16 J 15/32**

(54) **Wellendichtring.**

(30) Priorität : 01.07.83 DE 3323741

(43) Veröffentlichungstag der Anmeldung :
09.01.85 Patentblatt 85/02

(45) Bekanntmachung des Hinweises auf die Patenterteilung : 09.09.87 Patentblatt 87/37

(84) Benannte Vertragsstaaten :
AT BE CH DE FR GB IT LI LU NL SE

(56) Entgegenhaltungen :
DE-A- 1 600 458
Patent Abstracts of Japan vol. 4, no. 64, 14 Mai 1980
Page 128M11 & JP-A-55-30543

(73) Patentinhaber : **Firma Carl Freudenberg**
**Höhnerweg 4**
**D-6940 Weinheim/Bergstrasse (DE)**

(72) Erfinder : **Forch, Hans**
**Sandbuckelweg 29**
**D-6943 Birkenau (DE)**

(74) Vertreter : **Weissenfeld-Richters, Helga, Dr.**
**Höhnerweg 2**
**D-6940 Weinheim/Bergstrasse (DE)**

**Beschreibung**

Die Erfindung betrifft einen Wellendichtring für eine unter erhöhtem Druck stehende Flüssigkeit, bestehend aus einem Stützring mit Winkelförmigem Profil und einem Lippenring aus polymerem Werkstoff, der flüssigkeitsdicht und verdrehsicher an dem nach innen weisenden Schenkel des Stützringes festgelegt ist und die abzudichtende Welle mit einer Anlagefläche berührt, wobei die Anlagefläche durch gleichmäßig auf dem Umfang verteilte Kanäle unterbrochen ist, die in Richtung des abzudichtenden Mediums offen sind und die eine geringere axiale Erstreckung haben als die Anlagefläche.

Die JA-A 55 30 543 von der im Oborbegriff des Anspruchs 1 ausgegangen wird zeigt eine Spaltdichtung, bei der eine die abzudichtende Welle umschließende Zylinderfläche von gleichmäßig auf dem Umfang verteilten Kanälen unterbrochen ist. Die Kanäle haben in axialer Richtung eine kleinere Erstreckung als die Zylinderfläche und sind der Rotationsachse unter einem spitzen Winkel zugeordnet. Sie üben dadurch in Abhängigkeit von der jeweiligen Drehzahl der Welle eine unterschiedlich große Rückförderwirkung auf das abzudichtende Medium aus, was bei hohen Wellendrehzahlen zum Auftreten einer Mangelschmierung der dynamischen Abdichtungszone mit der Folge vorzeitigen Ausfalls der Dichtung führen kann, bzw. zu einer erheblichen Leckage bei sich ändernder Drehrichtung.

Ein weiterer Wellendichtring der vorgenannten Art ist durch die DE-PS 16 00 458 bekanntgeworden. Die Kanäle dienen der Rückförderung von unter der Dichtkante hindurchgedrungener Leckflüssigkeit und ihre Seitenflächen schließen zur Erreichung dieses Zweckes mit der Dichtungsachse einen spitzen Winkel ein. Höhere Drücke können unter Verwendung einer solchen Dichtung nicht abgedichtet werden. Der bei Wellenstillstand erzielte Abdichtungseffekt läßt sehr zu wünschen übrig.

Der Erfindung liegt die Aufgabe zugrunde, einen Wellendichtring der vorgensannten Art derart weiterzuentwickeln, daß hohe Drücke von mehr als 50 bar, vorzugsweise von mehr als 100 bar, bei stehender und sich in beliebiger Richtung drehender Welle gleichgut abgedichtet werden.

Diese aufgabe wird erfindungsgemäß bei einem Wellendichtring der eingangs genannten Art mit den kennzeichnenden Merkmalen des Patentanspruchs 1 gelöst. Auf vorteilhafte Ausgestaltungen nehmen die Unteransprüche Bezug.

Der Lippenring des vorgeschlagenen Wellendichtringes besteht aus einem nachgiebigen polymeren Werkstoff, vorzugsweise aus Gummi. Dieser erfährt während der sich betriebsbedingt ergebenden Druckbeaufschlagung eine elastische Verformung, die dazu führt, daß sich die von dem abgedichteten Medium abgewandte Kegelfläche oberflächeneben an die abgedichtete Welle anlegt. Die einen größeren Abstand von der Dichtkante aufweisenden Bereiche werden in diesem Falle bei einer Ausführung nach DE-C 16 00 458 nicht mehr ausreichend geschmiert, und es kommt, ausgehend von diesen Zonen, zu einer langsam in Richtung der Dichtkante fortschreitenden Zerstörung der Kegelfläche. Ein vorzeitiger Ausfall des Dichtringes ist hiervon die Folge.

Vergleichbare Schwierigkeiten treten bei der vorgeschlagenen Ausführung nicht mehr auf. Sie werden dadurch behoben, daß den einen größeren Abstand von der Dichtkante aufweisenden Bereichen der Kegelfläche durch die sich in axialer Richtung erstreckenden Kanäle Schmierflüssigkeit zugeführt wird. Die Reibung im Bereich dieser Fläche und damit die reibungsbedingt entstehende Wärme vermag die kritische Schwelle nicht zu überschreiten.

Die Kanäle der vorgeschlagenen Ausführung werden durch sich parallel zur Rotationsachse erstreckender Seitenflächen begrenzt. Sie vermögen daher keinerlei hydrodynamisch wirkenden Rückfördereffekt auf das abgedichtete Medium auszuüben.

Die Seitenflächen der Kanäle sollen am Fußpunkt mit der Oberfläche der abgedichteten Welle einen Winkel $\alpha$ von nicht mehr als 90° einschließen, vorzugsweise einen solchen von 40 bis 60°. Größere Winkel können einen dichteren gegenseitigen Abstand benachbarter Kanäle erfordern, kleinere Winkel können bei der Abdichtung besonders dünnflüssiger Medien zu unerwünschter Leckage führen. Die Querschnittsform ist im übrigen beliebig. Sie umfaßt rechteckige, dreieckige und halbkreisförmige Profile. Mischformen sind ohne weiteres möglich.

Die Kanäle sollen sehr fein ausgebildet sein und nur eine Tiefe von 0,01 bis 0,05 mm haben bei einer Breite von 0,03 bis 1,0 mm. Eine bevorzugte Ausführung weist eine Tiefe von 0,03 mm bei einer Breite von 0,06 mm auf. Der gegenseitige Abstand beträgt im allgemeinen 1 bis 5 mm, bevorzugt 2 bis 3 mm.

Die mit dem vorgeschlagenen Wellendichtring erzielten Vorteile bestehen in einer besonders guten Betriebssicherheit sowohl bei der Abdichtung stehender als auch sich drehender Wellen. Drücke von 100 bar sind ohne weiteres erreichbar.

Der Gegenstand der vorliegenden Erfindung wird nachfolgend anhand der in der Anlage beigefügten Zeichnung weiter erläutert. Es zeigen :

Figur 1 eine beispielhafte Ausführung des vorgeschlagenen Wellendichtringes in halbgeschnittener Darstellung.

Figuren 2 bis 4 ausschnittsweise Vergrößerungen von Querschnitten durch verschiedenartig ausgebildete Kanäle.

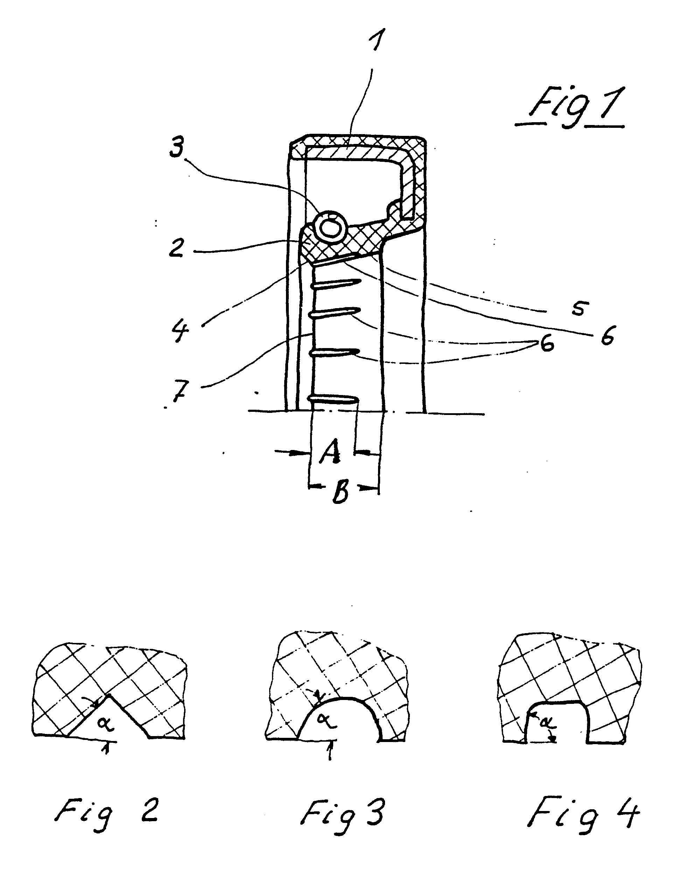

Der in Figur 1 gezeigte Wellendichtring besteht aus einem Versteifungsring 1 mit winkelförmigem Profil. Dieser trägt an seinem, in radialer Richtung nach innen weisenden Schenkel den unmittelbar anvulkanisierten Lippenring 2 aus gummielastischem Werkstoff. Dieser weist die Dichtkante 7 auf, die durch die sich gegenseitig durchschneidenden Kegelflächen 4 und 5 gebildet wird. Radial außerhalb der Dichtkante 7 ist auf den Lippenring eine Ringwendelfeder 3 aufgelegt, die eine gleichmäßige Anpressung des Lippenringes an die abgedichtete und nicht dargestellte Welle bewirkt.

Die von dem abgedichteten Medium abgewandte Kegelfläche 5 des Lippenringes enthält eine Vielzahl von gleichmäßig auf dem Umfang verteilten Kanälen 6, die in Richtung des abgedichteten Mediums offen sind und die Dichtkante durchbrechen.

Die Kanäle haben ein halbkreisförmig begrenztes Profil sowie eine gleichbleibende Tiefe auf ihrer gesamten axialen Erstreckung.

Bei einer Druckbeaufschlagung des Wellendichtringes nach Figur 1 ergibt sich eine elastische Verformung des Lippenringes und als Folge hiervon ein axialer Flächenkontakt zwischen der Kegelfläche 5 und der Oberfläche der abgedichteten Welle. Zugleich dringt abgedichtetes Medium in die Kanäle 6 ein und wird mit beginnender Drehung der abgedichteten Welle gleichmäßig auf die gesamte Anlagefläche verteilt. Eine ausreichende Schmierung ist in diesem Falle gewährleistet. Bei Wellenstillstand kann Reibungswärme nicht entstehen. Eine ausreichende Anpressung der Kegelfläche an die Oberfläche der abgedichteten Welle ist in diesem Falle gewährleistet, weil die axiale Erstreckung A der Kanäle kleiner ist als die axiale Erstreckung B der an der Welle anliegenden Kegelfläche. Letztere ist in ihrer Größe etwa vergleichbar mit der Größe der hydraulisch wirksamen Außenseite des beweglichen Teiles des Lippenringes.

Die Figuren 2 bis 4 zeigen Querschnitte durch beispielhafte Ausführungen von Kanälen. Figur 2 zeigt eine Ausführung, die ein dreieckig begrenztes Profil aufweist. Der Winkel α beträgt in diesem Falle 45°. Die Seitenflächen sind in sich eben ausgebildet.

Figur 3 nimmt Bezug auf eine Ausführung, bei der die Seitenflächen ineinander übergehen und konkav ausgewölbt sind. Die Seitenflächen und die Oberfläche der abgedichteten Welle berühren einander unter einem Winkel von 68°.

Figur 4 nimmt Bezug auf einen Kanalquerschnitt mit rechteckigem Profil. Die Seitenflächen stoßen in diesem Falle auf die Oberfläche der abgedichteten Welle unter einem Winkel von 90°. Sie gehen abgerundet ineinander über.

**Patentansprüche**

1. Wellendichtring für eine unter erhöhtem Druck stehende Flüssigkeit, bestehend aus einem Stützring (1) mit Winkelförmigem Profil und einem Lippenring (2) aus polymerem Werkstoff, der flüssigkeitsdicht und verdrehsicher an dem nach innen weisenden Schenkel des Stützringes (1) festgelegt ist und die abzudichtende Welle mit einer Anlagefläche (5) berührt, wobei die Anlagefläche (5) durch gleichmäßig auf dem Umfang verteilte Kanäle (6) unterbrochen ist, die in Richtung des abzudichtenden Mediums offen sind und die eine geringere axiale Erstreckung haben als die Anlagefläche (5), dadurch gekennzeichnet, daß die Kanäle (6) durch sich parallel zu der Dichtung axial erstreckende Seitenflächen begrenzt sind, daß der Lippenring (2) aus Gummi besteht, daß die Anlagefläche (5) als eine in Richtung des abzudichtenden Mediums verjüngte Kegelfläche erzeugt ist und daß sie herstellungsbedingt einen Maximaldurchmesser aufweist, der größer ist als der Durchmesser der abzudichtenden Welle.

2. Wellendichtring nach Anspruch 1, dadurch gekennzeichnet, daß die Seitenflächen der Kanäle (6) und die Oberfläche der Welle einen Winkel von 20 bis 90° einschließen.

3. Wellendichtring nach Anspruch 1 bis 2, dadurch gekennzeichnet, daß die Seitenflächen der Kanäle (6) und die Oberfläche der Welle einen Winkel (α) von 40 bis 60° einschließen.

4. Wellendichtring nach Anspruch 1 bis 3, dadurch gekennzeichnet, daß, die Seitenflächen der Kanäle (6) eine sich quer zur Dichtungsachse erstreckende Wölbung aufweisen.

5. Wellendichtring nach Anspruch 4, dadurch gekennzeichnet, daß die Wölbung konkav ausgebildet ist.

6. Wellendichtring nach Anspruch 1 bis 5, dadurch gekennzeichnet, daß das Verhältnis aus der Breite der sich bei Druckbeaufschlagung ergebenden Anlagefläche der Kegelfläche (5) und der axialen Erstreckung (A) der Kanäle (6) 0,6 bis 0,9 beträgt.

7. Wellendichtring nach Anspruch 1 bis 6, dadurch gekennzeichnet, daß die Kanäle (6) eine in Richtung des abgedichteten Mediums zunehmende Tiefe haben.

8. Wellendichtring nach Anspruch 1 bis 7, dadurch gekennzeichnet, daß das Verhältnis aus den gegenseitigen Abständen und der axialen Länge der Kanäle (6) 0,5 bis 2 beträgt.

**Claims**

1. A ring seal for a shaft against a liquid under elevated pressure, comprising a support ring (1) having an angular profile and a lip ring (2) of polymeric material, which is fixed in a liquid-tight and torsionally secure fashion on the inwardly directed limb of the support ring (1) and contacts the shaft to be sealed off at a contact surface (5), the contact surface (5) being interrupted by channels (6) which are evenly distributed over the circumference, are open in the direction of the medium to be sealed off and have a smaller axial extent than the contact surface (5), characterised in that the channels (6) are bounded by side surfaces extending axially parallel to the seal, that the lip ring (2) is made of rubber, that the contact surface (5) is produced as a conical surface tapered in the direction of the medium to be sealed off and that it has, due to its production, a maximum diameter which is greater than the diameter of the shaft to be sealed off.

2. A ring seal for a shaft according to claim 1, characterised in that the side surfaces of the channels (6) and the surface of the shaft define an angle of 20 to 90° between them.

3. A ring seal for a shaft according to claim 1 or 2, characterised in that the side surfaces of the channels (6) and the surface of the shaft define an angle ($\alpha$) of 40 to 60° between them.

4. A ring seal for a shaft according to any of claims 1 to 3, characterised in that the side surfaces of the channels (6) have a curvature extending transversely to the axis of the seal.

5. A ring seal for a shaft according to claim 4, characterised in that the curvature is of concave design.

6. A ring seal for a shaft according to any of claims 1 to 5, characterised in that the ratio of the width of the contact surface of the conical surface (5) produced under pressure stress to the axial extent (A) of the channels (6) is 0.6 : 1 to 0.9 : 1.

7. A ring seal for a shaft according to any of claims 1 to 6, characterised in that the channels (6) have a depth which increases in the direction of the medium sealed off.

8. A ring seal for a shaft according to any of claims 1 to 7, characterised in that the ratio of the mutual spacings of the channels (6) to their axial lengths is 0.5 : 1 to 2 : 1.

## Revendications

1. Joint annulaire pour arbre pour liquide sous haute pression constitué d'une bague de support (1) à profil angulaire et d'une bague à lèvre (2) en matériau polymère qui est fixée sur la branche de la bague de support (1) tournée vers l'intérieur sans possibilité de rotation et de manière étanche au liquide et qui vient au contact de l'arbre à rendre étanche par une surface de contact (5) tandis que la surface de contact ( 5) est interrompue par des canaux (6) répartis régulièrement sur sa périphérie, qui sont ouverts en direction du fluide à contenir et qui présentent une plus faible extension axiale que la surface de contact (5) caractérisé en ce que les canaux (6) sont délimités par des surfaces latérales s'étendant dans le sens axial, parallèlement aux joints, en ce que la bague à lèvre (2) est réalisée en caoutchouc, en ce que la surface de contact (5) se présente sous forme d'une surface conique se rétrécissant en direction du fluide à contenir et en ce qu'elle présente un diamètre maximal dépendant des conditions de fabrication qui est supérieure au diamètre de l'arbre à rendre étanche.

2. Joint annulaire pour arbre selon la revendication 1 caractérisée en ce que les surfaces latérales des canaux (6) et la surface de l'arbre se recoupent suivant un angle de 20 à 90°.

3. Joint annulaire pour arbre selon les revendications 1 et 2 caractérisé en ce que les surfaces latérales des canaux (6) et la surface de l'arbre se recoupent suivant un angle alpha de 40 à 60°.

4. Joint annulaire pour arbre selon les revendications 1 à 3, caractérisé en ce que la surface latérale des canaux (6) présente une courbure s'étendant transversalement par rapport à l'axe du joint.

5. Joint annulaire pour arbre selon la revendication 4, caractérisée en ce que la courbure est concave.

6. Joint annulaire pour arbre selon les revendications 1 à 5 caractérisé en ce que le rapport de la largeur de la surface de contact de la surface conique (5) apparaissant en cas de mise sous pression à l'extension axiale (A) des canaux (6) est compris entre 0,6 et 0,9.

7. Joint annulaire pour arbre selon les revendications 1 à 6 caractérisé en ce que les canaux (6) présentent une profondeur croissante en direction du fluide à contenir.

8. Joint annulaire pour arbre selon les revendications 1 à 7 caractérisé en ce que le rapport des intervalles entre les canaux (6) à leur longueur axiale est compris entre 0,5 et 2.

Fig 1

Fig 2

Fig 3

Fig 4